**Europäisches Patentamt**

**European Patent Office**

**Office européen des brevets**

(11) Veröffentlichungsnummer: **0 024 450**
**B1**

# EUROPÄISCHE PATENTSCHRIFT

(45) Veröffentlichungstag der Patentschrift: **17.10.84**

(21) Anmeldenummer: **79103562.9**

(22) Anmeldetag: **21.09.79**

(51) Int. Cl.³: **B 01 D 46/00, C 21 B 7/22 //**
**B01D46/02, B04C5/28**

(54) Entstaubungseinrichtung.

(30) Priorität: **06.07.79 DE 2927317**

(43) Veröffentlichungstag der Anmeldung:
**11.03.81 Patentblatt 81/10**

(45) Bekanntmachung des Hinweises auf die
Patenterteilung:
**17.10.84 Patentblatt 84/42**

(84) Benannte Vertragsstaaten:
**BE FR IT LU NL SE**

(56) Entgegenhaltungen:
**BE-A- 551 709**
**BE-A- 724 787**
**DD-A- 107 396**
**DE-A-2 733 865**
**DE-A-2 903 522**
**FR-A- 699 636**
**US-A-3 960 528**

**Uhlmanns Encyklopädie der Technischen**
**Chemie, Band 2, 1972, Seiten 225, 227, 236**

(73) Patentinhaber: **Mannesmann Demag AG**
**Wolfgang-Reuter-Platz**
**D-4100 Duisburg (DE)**

(72) Erfinder: **Eisenbarth, Manfred**
**Landauer Strasse 80**
**D-6660 Zweibrücken (DE)**

(74) Vertreter: **Flaig, Siegfried, Dipl.-Ing. (FH)**
**Mannesmann AG Mannesmannufer 2**
**D-4000 Düsseldorf (DE)**

Courier Press, Leamington Spa, England.

## Beschreibung

Die Erfindung betrifft eine Entstaubungseinrichtung mit vom Staubvorabscheider getrennt angeordneten Filtern, wobei der Staubvorabscheider im Zentrum und die Filter konzentrisch um den Umfang verteilt angeordnet sind und wobei die Filter jeweils am Eingang mittels getrennter Rohgasrohre unmittelbar an den Staubvorabscheider und am Ausgang mittels ebenfalls jeweils getrennter Reingasrohre unmittelbar an eine zwischen den Filtern und dem Staubvorabscheider verlaufende Reingassammelleitung angeschlossen sind, wobei sowohl am Eingang als auch am Ausgang jedem Filter Absperrventile zugeordnet sind und mit von den Filtern jeweils getrennt in den Staubvorabscheider mündenden Staubabzugsrohren.

Eine derartige Entstaubungseinrichtung entspricht der in der BE—A1—551 709 beschriebenen. Die bekannte Entstaubungseinrichtung benutzt jedoch Zyklone, die keinen hohen Entstaubungsgrad erreichen Außerdem besteht des bekannte Entstaubungsverfahren lediglich aus zwei Gasreinigungsstufen, die zu einem geringen Entstaubungsgrad führen.

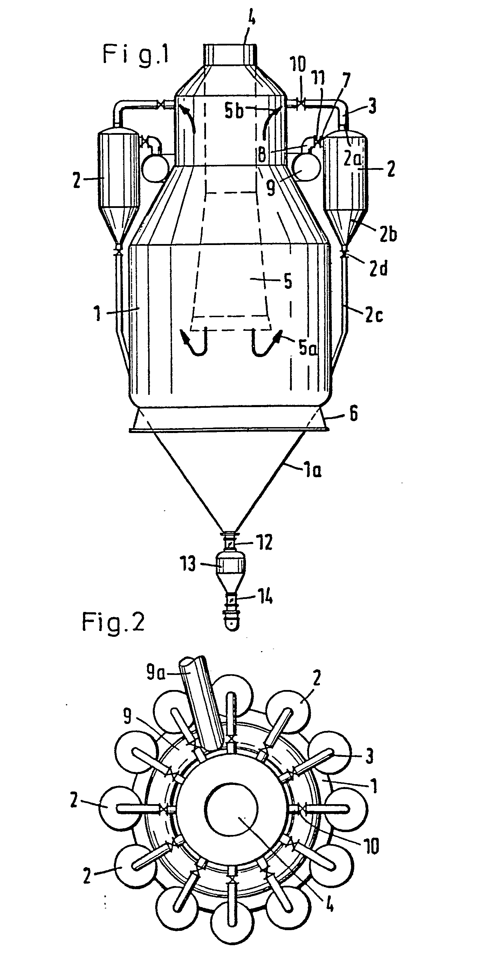

Es ist ferner ein Filterbehälter mit Schlauchfiltern bekannt (Ullmann, Encyklopädie der technische Chemie, Band 2, 4. Auflage, Verlag Chemie/Weinheim, Seite 236, Abb. 1). Nachteilig ist bei diesem Filterbehälter, daß das Rohglas seitlich in den Staubsack zugeführt, umgelenkt und hierbei Grobstaub abgeschieden wird, was ebenfalls nur ein zweistufiges Gasreinigungsverfahren darstellt. Außerdem verursacht die seitliche Rohgaszuführung eine ungleichmäßige Beaufschlagung des Staubes auf die Schlauchfilter, so daß diese teils mit weniger teils mit mehr Staub beaufschlagt werden.

Der Erfindung liegt die Aufgabe zugrunde eine Verbesserung des Entstaubungsgrades sowie größere Spülintervalle für die Filter in den Filterbehältern zu erzielen.

Diese Aufgabe wird erfindungsgemäß dadurch gelöst, daß die Filter aus im Trockenverfahren betriebenen Filterbehältern bestehen, mit jeweils darin angeordneten Filterelementen und mit jeweils einen zentral oben in den Filterbehälter einmündenden Rohgasrohr und einem deren anschließenden den Filterbehälter zentral durchsetzenden Entspannungsrohr, das untershalb der Filterelemente endet, wobei untershalb der Filterelemente jeweils ein zusätzlicher Staubvorabscheiderraum im Bereich des Anschlusses für das Staubabzugsrohr vorgesehen ist.

Diese Lösung besitzt den Vorteil, daß durch ein dreistufiges Entstauben der Entstaubungsgrad verbessert wird sowie größere Spül-Intervalle für die Filter in den Filterbehältern erreicht werden.

Der höhere Entstaubungsgrad wird außerdem dadurch erzielt, daß in den Filterbehältern jeweils Filterelemente angeordnet sind.

Eine zusätzliche Anwendbarkeit der Erfindung für die Nieder- und Hochdruckgasreinigung nach dem Prinzip der trockenen Reinigung ergibt sich dann, wenn die Filterbehälter als druckfestes Gehäuse für Drücke höher als 2 bar ausgebildet sind.

Ein Ausführungsbeispiel der Erfindung ist in der Zeichnung dargestellt und wird im folgenden näher beschrieben. Es zeigen

Fig. 1 die erfindungsgemäße Entstaubungseinruchtung von der Seite gesehen,

Fig. 2 die zu Figur 1 gehörende Draufsicht,

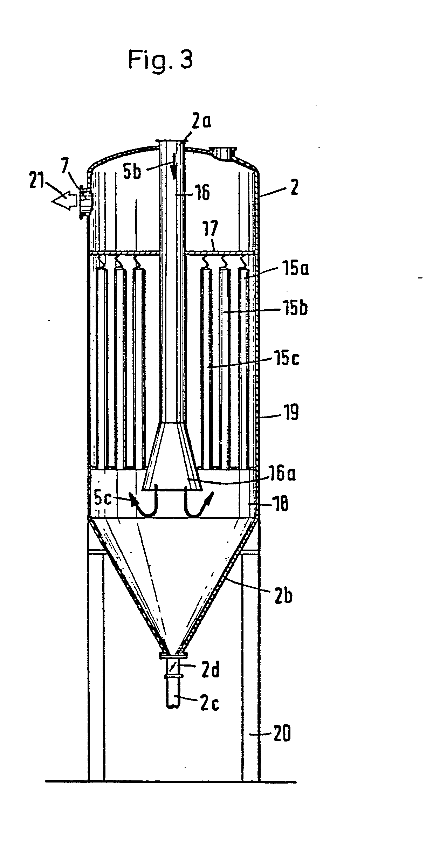

Fig. 3 einen senkrechten Achsenschnitt durch die in großer Zahl vorgesehenen Kompakt-Filterbehälter.

Die Entstaubungseinrichtung weist den Staubvorabscheider 1 auf und mehrere, z.B. wie gezeichnet, zwölf Filterbehälter 2, die am Eingang 2a mittels des Rohgasrohres 3 unmittelbar an den Staubvorabscheider 1 angeschlossen sind. Der Eingang 4 des Staubvorabscheiders 1 wird durch ein Entspannungsrohr 5 gebildet. Der Staubvorabscheider 1 stüzt sich mit dem Sockel 6 auf weiter nicht dargestellte Lager, Fundamente oder Gebäudeteile einer Anlage. Die Filterbehälter 2 sind am Ausgang 7 mittels kurzer Reingasrohre 8 an die Reingassammelleitung 9 angeschlossen. Das Rohgasrohr 3 kann mittels des Absperrventils 10 und das Reingasrohr 8 mittels des Absperrventils 11 verschlossen werden. Von den konischen Staubbunkern 2b führen jeweils Staubabzugsrohre 2c in den konischen Staubbunker 1a des Staubvorabscheiders 1. Der gesamte durch die erfindungsgemäße Einrichtung ausgeschiedene Staub sammelt sich infolgedessen in dem Staubbunker 1a, der unten durch ein erstes Absperrventil 12 verschließbar ist. Unterhalb des Absperrventils 12 befindet sich die Schleusenkammer 13 und unter dieser ein weiteres, zweites Absperrventil 14. Der gasamte durch die Entstaubungseinrichtung abgeschiedene Staub wird an einem Ort, d. h. an der Schleusenkammer 13, abgeführt.

In Fig. 2 bildet der Staubvorabscheider 1 das Zentrum für die zwölf über dessen Umfang verteilt angeordneten Filterbehälter 2.

In den Filterbehältern 2 sind jeweils Filterelemente 15a, 15b, 15c in Reihen um ein Entspannungsrohr 16 an einer Aufhängung 17 befestigt. Das Entspannungsrohr 16 mündet mit seiner konischen Erweiterung 16a in dem Vorabscheiderraum 18, an den sich der Staubbunker 2b anschließt. Der Staubbunker 2b ist vorteilhafterweise nur mittels des einzigen Absperrventils 2d verschließbar und braucht wegen des Anschlusses an den Staubvorabscheider 1 nicht doppelt gegen die Atmosphäre abgedichtet zu werden. Die Filterbehälter 2 weisen ferner gasdruckfeste Gehäuse 19 für Drücke über 2 bar auf. Die Filterbehälter 2 ruhen ferner auf Gestellen 20, die auf (weiter nicht dargestellten) Konsolen des Staubvorabscheiders 1 oder auf selbständigen Stützflächen aufgestellt sind.

Die beschriebene Entstaubungseinrichtung arbeitet nach dem folgenden Verfahren: Hochofengichtgas oder sonstige, staubbeladene Gase, die in gereinigtem Zustand einer weiteren Verwertung, z. B. einer Energierdrückgewinnungsanlage, zugeführt werden oder als gereinigtes Gas durch einem Schornstein umweltfreundlich in die Atmosphäre geleitet werden, gelangt durch den Eingang 4 in das Entspannungrohr 5 des Staubvorabscheiders 1 und erfährt eine senkrechte Umlenkung in Pfeilrichtung 5a, wodurch schwere Staubpartikel nach dem Prinzip der Massenkraftabscheidung ausgeschieden werden (1. Entstaubungsstufe). Der abgeschliedene Staub sammelt sich im Staubbunker 1a. Das Staubgas strömt weiter in Pfeilrichtung 5b und bei geöffnetem Absperrventil 10 (Figur 2) durch das Entspannungsrohr 16 in die Umlenkrichtung 5c, wobei eine erneute Staubausscheidung nach dem Prinzip der Massenkraftabscheidung bewirkt wird (2. Entstaubungsstufe). Das nunmehr noch mit Staubteilchen geringerer Korngröße beladene Gas strömt durch die Filterelemente 15 (a, b, c), wird weitestgehend gereinigt (3. Entstaubungsstufe), verläßt den Filterbehälter 2 bei geöffnetem Absperventil 11 durch das Reingasrohr 8 und strömt somit als Reingas 21 in die Reingassammelleitung 9, von dort aus durch die Reingasableitung 9a (Figur 2) in die erwähnte Energierückgewinnungsanlage, wo die innewohnende Wärme verwertet wird (bzw. durch den Schornstein in das Freie). Der in dem Filterbehälter 2 ausgeschiedene Staub sammelt sich in dem Staubbunker 2b, wobei solcher Staub auch bei Spülvorgängen aus den Filterelementen 15 (a, b, c) nach unten fällt. Der Staub gelangt durch das Staubbabzugsrohr 2c bei geöffnetem Absperrventil 2d und geschlossenem Absperrventil 11 in den Staubbunker 1a des Staubvorabscheiders 1.

## Patentansprüche

1. Entstaubungseinrichtung mit von Staubvorabscheider (1) getrennt angeordneten Filtern, wobei der Staubvorabscheider (1) im Zentrum und die Filter konzentrisch um den Umfang verteilt angeordnet sind und wobei die Filter jeweils am Eingang (2a) mittels getrennter Rohgasrohre (3) unmittelbar an den Staubvorabscheider (1) und am Ausgang (7) mittels ebenfalls jeweils getrennter Reingasrohre (8) unmittelbar an eine zwischen den Filtern und dem Staubvorabscheider (1) verlaufende Reingassammelleitung (9) angeschlossen sind, wobei sowohl am Eingang (2a) als auch am Ausgang (7) jedem Filter Absperrventile (10, 11) zugeordnet sind und mit von den Filtern jeweils getrennt in den Staubvorabscheider (1) mündenden Staubabzugsrohren (2c), dadurch gekennzeichnet, daß die Filter aus im Trockenverfahren betriebenen Filterbehältern (2) bestehen, mit jeweils darin angeordneten Filterelementen (15a, 15b, 15c) und mit jeweils einem zentral oben in den Filterbehälter (2) einmündenden Rohgasrohr (3) und einem daren, anschließenden dem Filterbehälter (2) zentral durchsetzenden Entspannungsrohr (16), das unterhalb der Filterelemente endet, wobei unterhalb der Filterelemente jeweils ein zusätzlicher Staubvorabscheideraum (18) im Bereich des Anschlusses für das Staubabzugsrohr (2c) vorgesehen ist.

2. Einrichtung nach Anspruch 1, dadurch gekennzeichnet, daß die Filterbehälter (2) als druckfestes Gehäuse (19) für Drücke höher als 2 bar ausgebildet sind.

## Claims

1. Dedusting equipment with filters arranged apart from the primary dust separator (1) which is centrally installed whilst the filters are located in a concentric pattern on the circumference, filters being connected between intake (2a) and primary dust separator (1) by individual crude gas pipes (3) direct and between outlet (7) and primary separator (1) by likewise individual clean gas pipes (8) which link up with a clean gas header (9) arranged between filters and primary dust separator (1) so that each filter has appertaining shut-off valves (10, 11) at intake (2a) as well as at outlet (7) in such manner that the single dust discharge tubes (2c) from the individual filters enter the primary dust separator (1), characterized by: Filters consisting of dry filter frames (2) with filter elements (15a, 15b, 15c) therein, a crude gas pipe (3) entering the top part of frame (2) centrally and connected to an expansion pipe (16) passing through the filter frame centre section to end below the filter elements where an additional primary dust separating chamber (18) is provided for in the vicinity of the dust discharge tube (2c) connection.

2. Dedusting equipment to Claim 1 characterized by: Filter frames (2) being enclosed in pressureresistant housings (19) suitable for pressures upwards of 2 bar.

## Revendications

1. Installation de dépoussiérage avec filtres disposés séparément par rapport au préséparateur de poussière (1), le préséparateur de poussière (1) étant disposé au centre et les filtres répartis concentriquement sur le pourtour et raccordés chacun à l'entrée (2a) au moyen de tubes de gaz brut (3), immédiatement au préséparateur de poussière (1) et à la sortie (7) également chacun au moyen de tubes de gaz pur (8) séparés, immédiatement à une conduite collectrice de gaz pur (9) passant entre les filtres et le préséparateur de poussière (1), une vanne d'arrêt (10, 11) étant affectée à chaque filtre aussi bien à l'entrée (2a) qu'à la sortie (7) et avec tubes d'évacuation de poussière (2c) débouchant séparés des filtres dans le préséparateur de poussière (1)

caractérisé par ce que

les filtres se composent de corps de filtre (2) fonctionnant au procédé à sec renfermant chacun des éléments filtrants (15a, 15b, 15c) et chacun avec un tube de gaz brut (3) débouchant centralement dans le haut du corps de filtre (2) et un tube de détente (16) y raccordé passant centralement à travers le corps de filtre (2) et se terminant au-dessous des éléments filtrants, un espace de préséparation de poussière complémentaire (18) étant prévu à chaque fois au-dessous des éléments filtrants dans la zone du raccordement pour le tube d'évacuation de poussière (2c).

2. Installation suivant revendication 1, caractérisée par ce que

le corps de filtre (2) conçu comme carter (19) résistant à la pression pour pressions supérieures à 2 bars.

Fig.1

Fig.2

## Fig. 3